# FASCICULE DE BREVET EUROPEEN

(11) **EP 1 903 273 B1**
(45) Date de publication et mention de la délivrance du brevet: **12.08.2009**
(21) Numéro de dépôt: 06291467.6
(22) Date de dépôt: 19.09.2006
(51) Int. Cl.: F21S 8/10, H01K 9/08

(54) **Projecteur d'éclairage à double fonction pour véhicule automobile**
Kraftfahrzeugscheinwerfer mit zwei Funktionen
Dual function automobile headlamp

(43) Date de publication de la demande: 26.03.2008
(73) Titulaire: Peugeot Citroën Automobiles S.A., 78140 Vélizy Villacoublay (FR); Hella KGaA Hueck & Co., 59552 Lippstadt (DE)
(72) Inventeur: Duceux, Stéphane, 78340 Les Clayes Sous Bois (FR); Deschamps, Maurice, 92240 Malakoff (FR); Heinrich, Mertin, 59597 Erwitte (DE); Koehler, Stefan, 59556 Lippstadt (DE)
(74) Mandataire: Delaveau, Sophie

(56) Documents cités:
- EP-A1- 1 382 900
- WO-A-03/003410
- WO-A-20/05047765
- GB-A- 2 250 807
- US-A1- 2005 141 233
- US-B1- 6 439 739

## Description

La présente invention est relative à un dispositif permettant d'assurer plusieurs fonctions d'éclairage et de signalisation dans un projecteur de véhicule automobile.

On sait que les projecteurs dont sont équipés de manière usuelle les véhicules automobiles, doivent assurer au moins trois fonctions distinctes, correspondant respectivement à l'allumage de leurs feux de position, de leurs feux dits de code ou de croisement et enfin de leurs feux de route pour éclairer la voie sur une longue distance en avant du véhicule, notamment en conduite de nuit, ces divers feux étant commandés de manière alternative sous l'effet d'un moyen de déclenchement actionné par le conducteur depuis le tableau de bord de son véhicule ou disposé à proximité sur le volant.

La réglementation en vigueur impose par ailleurs que les feux de position restent allumés en conduite de nuit, en même temps que les feux de code et/ou de route, lorsque ceux-ci sont mis en oeuvre.

Les brevets français 2 775 057, 2 797 029 et 2 782 148 illustrent diverses réalisations de tels feux de signalisation.

Le document WO 03/003410 A1 divulgue un projecteur selon le préambule de la revendication 1.

Les projecteurs des véhicules modernes sont de plus en plus appelés à fournir également une fonction complémentaire, dite de feux de jour, qui a pour but de permettre une meilleure vision du véhicule en mouvement par un conducteur circulant sur la même voie mais en sens inverse, ces feux de jour présentant une surface suffisante et un niveau d'éclairage minimal, fixé par cette réglementation.

Il en résulte la nécessité de mettre sous tension permanente les projecteurs d'un véhicule lorsque celui-ci est en mouvement, tant pour assumer la fonction d'éclairage de jour que de nuit, mais avec des éclairages, c'est-à-dire des niveaux photométriques, différents.

La présente invention concerne un dispositif d'éclairage, apte à réaliser une double fonction combinée, de feux de position et de feux de jour, indépendamment de l'allumage des feux de code et de conduite de nuit, qui présente un encombrement en volume réduit avec néanmoins une large surface d'éclairage, illuminée à partir d'une unique source d'éclairement.

A cet effet, le dispositif considéré se caractérise en ce que chaque projecteur comporte une lampe de signalisation comprenant deux filaments voisins de puissances photométriques sensiblement différenciées, aptes à être mis sous tension séparément, un réflecteur principal comprenant un foyer situé sur le filament de la lampe dont la puissance est la plus élevée de manière à assurer la délivrance d'un faisceau de lumière de plus grande intensité pour un fonctionnement en feu de jour, un réflecteur secondaire comportant un foyer situé sur le filament de la lampe dont la puissance est la moins élevée, assurant la délivrance d'un faisceau de lumière de plus faible intensité pour un fonctionnement en feu de position, la lumière résiduelle reçue par l'un et l'autre des deux réflecteurs principal et secondaire en provenance de l'autre foyer non directement associé à chacun de ces réflecteurs, assurant un complément photométrique, soit à la fonction feu de position, soit à la fonction feu de jour.

Selon une caractéristique particulière, les réflecteurs principal et secondaire sont disposés l'un à côté de l'autre dans un boîtier commun.

Avantageusement, un miroir de renvoi est disposé entre le foyer situé sur le filament de la lampe dont la puissance est la moins élevée et le réflecteur secondaire.

Selon une caractéristique particulièrement avantageuse, les réflecteurs principal et secondaire sont des réflecteurs calculés pour délivrer des faisceaux de lumière parallèle avec une répartition conforme à la réglementation.

Le cas échéant, le projecteur comporte, à l'intérieur de son boîtier, une lampe d'éclairement indépendante, pour assurer la fonction de feu de route et de croisement.

D'autres caractéristiques d'un dispositif d'éclairage conforme à l'invention, apparaîtront encore à travers la description qui suit d'un exemple de réalisation, donné à titre indicatif et non limitatif, en référence aux dessins annexés sur lesquels :
- la Figure 1 est une vue schématique du boîtier d'un projecteur conforme à l'invention, comportant notamment deux sorties de lumière, respectivement pour le feu de position et le feu de jour.
- les Figures 2 et 3 sont des schémas optiques, illustrant la structure des réflecteurs du projecteur de la Figure 1, en fonctionnement en feu de position sur la Figure 2 et en feu de jour sur la Figure 3.

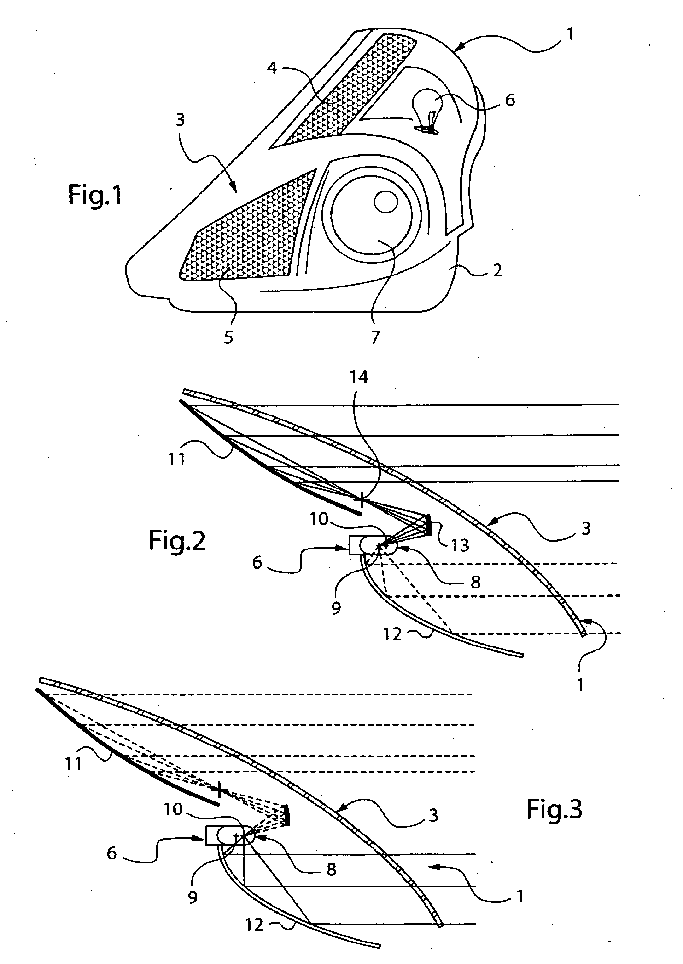

Sur la Figure 1, la référence 1 désigne le boîtier du projecteur d'éclairage considéré, comportant un caisson profilé 2, contenant les lampes et optiques diverses qui permettent de fournir les éclairement nécessaires. Un tel boîtier est évidemment prévu en symétrie d'un boîtier homologue, d'un côté et de l'autre de l'habitacle du véhicule, à l'avant de celui-ci.

Sur la surface externe 3 du caisson 2, sont prévues des zones 4 et 5, réservées à la sortie de la lumière qui correspond, respectivement à l'éclairement du feu de position et du feu de jour du véhicule, la lumière produite étant émise à partir d'une lampe unique 6 à deux filaments, aptes à délivrer des puissances différentes, par exemple de 5 et 21 watts.

A l'intérieur du boîtier est également montée une autre lampe 7, propre à délivrer un double éclairage de puissance notablement supérieure à celui fourni par la lampe de signalisation 6, pour un éclairage en avant du véhicule aussi bien en feu de code ou de croisement qu'en feu de route, cette lampe et les dispositions de sa mise en oeuvre étant toutefois indépendantes de l'invention et n'étant donc pas décrites ici plus en détail.

Les Figures 2 et 3 permettent de bien comprendre les caractéristiques de l'invention et les modalités d'utilisation du projecteur considéré.

Sur ces Figures, la lampe de signalisation 6 est schématiquement représentée, avec, montés côte à côte dans son enveloppe scellée et étanche 8, ses deux filaments 9 et 10, de faible et de plus grande puissance photométrique respectivement.

La lampe 6 est par ailleurs associée à deux réflecteurs 11 et 12, respectivement dédiés à l'éclairement du feu de position d'une part, du feu de jour d'autre part, le filament 9 de plus faible puissance étant situé au foyer optique du réflecteur 11, dit secondaire, tandis que le filament 10 de plus grande puissance est situé au foyer optique du réflecteur 12, dit principal.

Un miroir intermédiaire 13 est avantageusement monté dans le boîtier au voisinage de la lampe de signalisation 6 pour focaliser la lumière du filament 9 vers un foyer 14 commun aux deux réflecteurs afin de profiter au mieux de l'espace relativement réduit disponible dans le boîtier pour le montage de ces deux réflecteurs en permettant aux faisceaux de lumière qu'ils délivrent de se distinguer en n'interférant pas mutuellement.

Egalement, les réflecteurs secondaire 11 et principal 12, sont avantageusement constitués par des miroirs paraboliques, disposés de telle sorte que les faisceaux qu'ils renvoient traversent parallèlement les zones 4 et 5 du boîtier 1 en réalisant la photométrie des deux fonctions imposées.

Grâce à ces dispositions, les fuites de lumière non fonctionnelles renvoyées, soit par le réflecteur principal, soit par le réflecteur secondaire, lorsque le filament situé au foyer de l'autre est éclairé, permettent fournir un complément photométrique avec la mise en oeuvre de la fonction de feu de position ou de la fonction en feu de jour, en toute circonstance.

Dans le cas où le filament 9 de plus faible puissance est éclairé, la fonction feu de position fonctionne grâce à la lumière renvoyée par le réflecteur secondaire 11 via le miroir de renvoi 13, les fuites résiduelles qui atteignent le réflecteur principal 12 étant négligeables mais néanmoins visibles.

Dans le cas où le filament de plus grande puissance est éclairé, pour mettre en action la fonction feu de jour, celle-ci est opérationnelle du fait de la lumière renvoyée par le réflecteur principal, les fuites résiduelles éclairant le réflecteur secondaire 11 et mettant alors en action simultanément la fonction feu de position.

On réalise ainsi un projecteur à double fonction aptes à être mises en oeuvre à partir d'une seule et unique source d'éclairement, de jour comme de nuit, mais fournissant des niveaux photométriques différents.

Bien entendu, il va de soi que l'invention ne se limite pas au seul exemple de réalisation décrit et représenté ; elle en embrasse au contraire toutes les variantes.

## Revendications

1. Projecteur d'éclairage à double fonction pour véhicule automobile qui comporte une lampe de signalisation (6) comprenant deux filaments voisins (9,10) de puissances photométriques sensiblement différenciées, aptes à être mis sous tension séparément, **caractérisé en ce qu'**il comporte un réflecteur principal (11) comprenant un foyer situé sur le filament (10) de la lampe dont la puissance est la plus élevée de manière à assurer la délivrance d'un faisceau de lumière de plus grande intensité pour un fonctionnement en feu de jour, un réflecteur secondaire (12) comportant un foyer situé sur le filament (9) de la lampe dont la puissance est la moins élevée, assurant la délivrance d'un faisceau de lumière de plus faible intensité pour un fonctionnement en feu de position, la lumière résiduelle reçue par l'un et l'autre des deux réflecteurs principal et secondaire en provenance de l'autre foyer non directement associé à chacun de ces réflecteurs, assurant un complément photométrique, soit à la fonction feu de position, soit à la fonction feu de jour.

2. Projecteur selon la revendication 1,
**caractérisé en ce que** les réflecteurs principal et secondaire (11,12) sont disposés l'un à côté de l'autre dans un boîtier commun (1).

3. Projecteur selon l'une des revendications 1 ou 2, **caractérisé en ce qu'**un miroir de renvoi (13) est disposé entre le foyer situé sur le filament de la lampe (9) dont la puissance est la moins élevée et le réflecteur secondaire (11).

4. Projecteur selon l'une quelconque des revendications 1 à 3, **caractérisé en ce** les réflecteurs principal et secondaire (11,12) sont des réflecteurs calculés pour délivrer des faisceaux de lumière parallèle avec une répartition conforme à la réglementation.

5. Projecteur selon l'une quelconque des revendications 1 à 4, **caractérisé en ce qu'**il comporte, à l'intérieur de son boîtier (1), une lampe d'éclairement indépendante (7), pour assurer la fonction de feu de route et de croisement.

## Claims

1. A dual-function automobile headlamp, having a signal lamp (6) comprising two adjacent filaments (9, 10) of substantially differentiated photometric powers, capable of being switched on separately, **characterized in that** it comprises a main reflector (11) comprising a focus located on the filament (10) of the lamp, the power of which is greatest, so as to ensure delivering a higher intensity light beam for operation as a daytime driving light, a secondary reflector (12) having a focus located on the filament (9) of the lamp, the power of which is lowest, ensuring output of a lower intensity light beam for operation as a side marker light, with the residual light received by either of both the main and the secondary reflectors from the other focus not directly associated with each of the reflectors ensuring a photometric complement, either to the side marker light function or to the daylight driving light function.

2. Headlamp according to claim 1, **characterized in that** the main and secondary reflectors (11, 12) are arranged side by side in a common housing (1).

3. Headlamp according to any of claims 1 or 2,
**characterized in that** a deflection mirror (13) is arranged between the focus located on the filament of the lamp (9), the power of which is lowest, and the secondary reflector (11).

4. Headlamp according to any of claims 1 to 3,
**characterized in that** the main and secondary reflectors (11, 12) are reflectors calculated to output parallel light beams with a distribution according to regulations.

5. Headlamp according to any of claims 1 to 4,
**characterized in that** it comprises inside the housing (1) thereof an independent illuminating light (7) for ensuring the high beam and low beam function.

## Patentansprüche

1. Kraftfahrzeugscheinwerfer mit zwei Funktionen, der eine Signallampe (6) umfasst, die zwei nebeneinander liegende Fäden (9, 10) mit im Wesentlichen differenzierten photometrischen Leistungen umfasst, die getrennt eingeschaltet werden können, **dadurch gekennzeichnet, dass** er einen Hauptreflektor (11), der einen Brennpunkt umfasst, der sich auf dem Faden (10) der Lampe befindet, welche die höchste Leistung aufweist, um die Abgabe eines stärkeren Lichtstrahls zum Betrieb als Tagfahrlicht sicherzustellen, einen Nebenreflektor (12), der einen Brennpunkt umfasst, der sich auf dem Faden (9) der Lampe befindet, welche die niedrigste Leistung aufweist, um die Abgabe eines schwächeren Lichtstrahls zum Betrieb als Standlicht sicherzustellen, umfasst, wobei das Restlicht, das sowohl von dem Hauptreflektor als auch von dem Nebenreflektor von dem anderen Brennpunkt kommend empfangen wird, der nicht direkt mit jedem dieser Reflektoren verknüpft ist, eine photometrische Ergänzung entweder für die Standlichtfunktion oder für die Tagfahrlichtfunktion sicherstellt.

2. Scheinwerfer nach Anspruch 1, **dadurch gekennzeichnet, dass** die Haupt- und Nebenreflektoren (11, 12) nebeneinander in einem gemeinsamen Gehäuse (1) angeordnet sind.

3. Scheinwerfer nach einem der Ansprüche 1 oder 2, **dadurch gekennzeichnet, dass** ein Umlenkspiegel (13) zwischen dem Brennpunkt, der auf dem Faden der Lampe (9) angeordnet ist, welche die niedrigste Leistung aufweist, und dem Nebenreflektor (11) angeordnet ist.

4. Scheinwerfer nach einem der Ansprüche 1 bis 3,
**dadurch gekennzeichnet, dass** die Haupt- und Nebenreflektoren (11, 12) Reflektoren sind, die berechnet sind, um parallele Lichtstrahlen mit einer vorschriftsgemäßen Verteilung abzugeben.

5. Scheinwerfer nach einem der Ansprüche 1 bis 4,
**dadurch gekennzeichnet, dass** er in seinem Gehäuse (1) eine unabhängige Beleuchtungslampe (7) umfasst, um die Fernlichtund Abblendlichtfunktion sicherzustellen.
